# EUROPEAN PATENT APPLICATION

(11) **EP 2 458 704 A1**
(43) Date of publication of application: **30.05.2012**
(21) Application number: 10075745.9
(22) Date of filing: 30.11.2010
(51) Int. Cl.: H02J 3/32, H02J 7/00, H02J 7/04

(54) **Method and system for charging a fleet of batteries**

(71) Applicant: Restore N.V., 2140 Antwerpen (BE)
(72) Inventor: Rombouts, Jan-Willem, 2140 Antwerpen (BE); Gheerardyn, Jos, 8200 Brugge (BE); Mermans, Pieter Jan, 2140 Antwerpen (BE)
(74) Representative: Plas, Axel Ivo Michel

(57) **Abstract**

In a method for charging a fleet of batteries (110) from a power grid (100), a fleet charge schedule (301) is determined and thereafter individual battery charge schedules are dynamically optimized. The fleet charge schedule (301) for the entire fleet (110) is determined optimizing an energy portfolio balance of an energy portfolio manager. Thereafter, battery charge schedules for individual batteries (111, 112, 113, 114, 115, 116, 117, 118) in the fleet (110) are dynamically optimized such that the battery charge schedules in aggregation realize the fleet charge schedule (301). The battery charge schedules are dynamically optimized in consideration of at least technical specifications of assets in the battery fleet and user constraints of the battery users.

## Description

### Field of the Invention

The present invention generally relates to charging (or discharging) of a fleet of batteries, typically a few thousands of batteries. The batteries may be intermittently connected to and disconnected from the power grid, like for instance the batteries in a fleet of electric vehicles or hybrid vehicles (PHEVs), or may alternatively be stationary connected to the power grid, like for instance second-life batteries recuperated from electric vehicles or hybrid vehicles. The fleet of batteries for the purpose of the present invention in other words is considered as a virtual reservoir for electrical energy from the power grid. The nature, capacity and location of this virtual reservoir may vary permanently.

### Background of the Invention

Throughout this patent application, the term "Energy Portfolio Managers" will refer to those parties or entities connected to the electricity grid who are managing power supply and/or demand. Energy Portfolio Managers therefore include entities such as electricity suppliers and electrical power suppliers, but also micro-grids / virtual power plants (VPP). Energy portfolio managers connected to the grid are incentivized to keep their energy portfolio in balance by hedging costs and penalties from the incentivizing bodies. Examples of such incentivizing schemes include transmission network operators who penalize electricity suppliers and/or producers for supply-demand imbalances in the European market., so that it can achieve its own mandate to keep its high-voltage transmission grid stable. This means a continuous effort for energy portfolio managers to keep energy supply, e.g. provided by power production assets, equal to energy demand from business-to-business (B2B) and business-to-customer (B2C) clients.

Renewable energy like energy produced by wind or solar installations is by definition intermittent in nature. As a consequence, energy portfolio managers who have renewable energy production in their portfolio need to address an increased number of deviations between electricity demand and electricity supply as well as increased magnitudes of these deviations, stemming from the variability of their supply. The increased variability is undesirable because of its negative impact on the overall network stability and the energy portfolio manager in many regulatory environments will be penalized for such supply/demand mismatches, as mentioned here above. The increased variability is further undesirable because of its negative impact on the electricity supply reliability and quality, and the negative impact on the efficiency and profitability of energy production assets. The last mentioned aspect is important as e.g. wind and solar power producers are faced with the problem that energy is produced at times when the market value of electricity is low. In summary, the additional volatility complicates the risk management (in its broadest sense) of the energy portfolio.

Energy portfolio managers can balance their energy portfolios e.g. through storage of electrical energy at times of overproduction and release of energy reserves at times of underproduction.

Storage capacity for electric energy however is scarce today, especially in flat areas where hydro storage capacity is not or limited available, and no or few alternatives for storage of electrical energy are commercially viable. Power reserves, i.e. back-up power installations to balance the power grid as a substitute for storage, could be realized by pumped hydro or special gas-fired electricity plants, flywheels, super-capacitors, compressed air energy storage (CAES), etc. Such substitute power reserves currently have a variety of problems: some are too expensive (e.g. super-capacitors or dedicated Li-Ion batteries), others require special conditions like altitudes (e.g. hydro), the presence of water (e.g. hydro), empty mines (e.g. CAES), etc, that are usually not available. These substitute power reserves also lack storage efficiency (e.g. hydro has an in-out efficiency below 75 %) and - in the case of gas-fired electricity plants for instance - suffer from inefficient ramp-up periods.

The present invention assumes that large sets, i.e. fleets of thousands of batteries, e.g. available in electric vehicles, hybrid vehicles or in a stationary (e.g. second-life) battery pool and other controllable loads, will be available and aggregated into virtual reservoirs that can absorb the fluctuations in an energy manager's portfolio at a scale and in a fashion that is both technically and economically relevant. When available, the challenge will be to control charging (including discharging) and power demand of such a virtual reservoir or fleet of thousands of batteries and other controllable loads thereby optimizing the portfolio balance of an energy portfolio manager, e.g. an electricity supplier / power producer. In the case of stationary battery applications, the present invention reduces to a smart management system of battery packs, for instance a management system of second-life Electrical Vehicle (EV) batteries that are stored in a warehouse and connected to the grid, providing energy portfolio management services such as mentioned here above.

A method and system for charging a virtual pool or fleet of batteries is already described in United States Patent Application US 2008/0039980 from V2 Green Inc., entitled "Scheduling and Control in a Power Aggregation System for Distributed Electric Sources". US 2008/0039980 describes a power aggregation system that optimizes power flows from and to numerous electric resources, e.g. vast numbers of electrical vehicle (EV) batteries, dynamically to suit the needs of the power grid, i.e. stability. A flow control centre schedules charging/discharging based on power grid behaviour, predicted behaviour of vehicles, real-time data and energy prices. The owners of the electrical vehicles are enabled to participate in energy trading.

The method for charging a virtual pool of batteries known from US 2008/0039980 does not solve the fundamental problem of supply/demand imbalances for energy portfolio managers and/or grid operators. Indeed, as is indicated in paragraphs [0035] and [0108]-[0112] of US 2008/0039980, the charge scheduling function known from US 2008/0039980 only compensates for grid imbalances, unstable demands and firming of renewable energy sources at power grid level in order to maintain operation and stability of the power grid within or across an electric control area thereby optimizing power transport.

The method known from US 2008/0039980 is further disadvantageous in that relevant asset parameters, like for instance the deterioration and capacity loss of a battery through ageing or excessive charging cycles, are not considered. As a result, the end user constraints are not always met. Indeed, given the high cost of EV batteries, and the limited charge-discharge cycles the batteries typically offer, the cost of an additional charging cycle for an electric battery is a first order driver of the economics of EV usage in the network - e.g. the cost of a charge-discharge cycle may be more than the benefit that the battery owner gains by trading electricity (peak-through) as is done in US 2008/0039980. By incompletely charging/discharging batteries, instructing charge cycles driven by power grid operator requests without considering asset status and deterioration, the individual batteries in the fleet are penalized, their lifetime, efficiency and second-life value are reduced to the benefit of the power grid operator, which will not be acceptable to the battery owners.

In addition, the time varying nature of many important asset parameters is not fully taken into account. The method known from US 2008/0039980 has no self learning nature enabling it to take into account variation of for instance the load curve of batteries over time. As a consequence, the charge scheduling known from US 2008/0039980 will not take into account such variations as a result of which its accuracy and reliability will decrease over time.

Furthermore, it is clear that in US 2008/0039980 no dynamic optimization is done, neither within the fleet (i.e. how to sequentially charge the fleet given variable state-of-charges and user constraints), nor with respect to the grid operator. Thus, US 2008/0039980 does not take into account the future impact of current decisions. As a consequence, the charge schedule as proposed by US 2008/0039980 is even suboptimal with respect to solving the problem that is addressed, namely optimizing the internal charge schedule of a fleet to enhance grid stability to address the TSO's or grid operator's needs.

In summary, the closest prior art method for scheduling the charging of a fleet of batteries, known from US 2008/0039980, amongst other issues and shortcomings does not solve the problem of balancing the portfolio of energy portfolio managers, fails to consider some economically important asset parameters, does not take into account the time varying nature of asset parameters, and does not optimize dynamically projecting the impact of current decisions in the future.

It is an objective to provide a method and system for charging a fleet of batteries that overcomes the above mentioned drawbacks of the prior art. In particular, it is an objective of the present invention to disclose a method and system for charging a fleet that dynamically optimizes the portfolio balance of an energy portfolio manager whilst efficiently using the individual assets in the battery fleet.

### Summary of the Invention

According to the present invention, the above defined objectives are realized by the method for charging a fleet of batteries from a power grid defined by claim 1, the method comprising:
- determining a fleet charge schedule for the fleet thereby optimizing an energy portfolio balance of an energy portfolio manager; and
- dynamically optimizing battery charge schedules for individual batteries in the fleet, the battery charge schedules in aggregation realizing the fleet charge schedule, and the battery charge schedules being optimized dynamically in consideration of at least technical specifications of assets and user constraints of battery users.

Thus, the invention concerns a method for scheduling the charging / no charging / discharging of a fleet of batteries which is dynamically optimized in terms of both the energy portfolio balance and asset specifications while satisfying the EV-driver's constraints. At each period of time, there are two important considerations: firstly, the decision taken at fleet level to charge, discharge or do nothing in view of the (current requests and expected future requests) energy portfolio manager's portfolio balancing needs, and secondly, the decision to be taken at individual battery level to charge, discharge or do nothing taking into account the individual asset's specification such as for instance the battery deterioration or counted charge cycles, the local current, voltage and/or power limits in the distribution grid, etc., while satisfying the EV user constraints (e.g. the level of state of charge the drivers want to have by a given time of day). The fleet charge schedule and the individual battery charge schedules permanently interact with each other. If the decision is taken at fleet level to charge batteries, the amount of power that is stored into the batteries may for instance be smaller than what is requested by the energy portfolio manager as a result of availability of batteries. As a result, the charge control algorithm according to the current invention shall optimize charging patterns of batteries such that the energy portfolio manager's specific future and current (e.g. day-ahead and intra-day) balancing needs are maximally addressed while charging batteries optimally in view of deterioration, capacity loss, wear and tear and the resulting battery cost or depreciation thereof. In addition, charging is done as to always satisfy the EV-user constraints. Indeed, in addition to the asset specifications, the battery charge schedules must take into account user requirements. When the battery is a PHEV battery, the user constraints may for instance represent driver's requirements that are treated as overrides in the method according to the invention.

Preferably, as defined by claim 2, the technical specifications of assets in the battery fleet charging method according to the present invention comprise information indicative for the deterioration of the batteries.

Indeed, battery deterioration as a function of for instance the charge pattern and charge cycles added through usage of the battery in the energy market, is a key parameter to be considered to guarantee that the fleet charge schedule is translated into feasible battery charge schedules for the individual batteries, and to guarantee efficient, durable usage of the user's batteries. If battery deterioration is not considered, the algorithm shall produce battery charge schedules that do not result in the expected load status because the battery load curve is slower and/or the battery capacity is lower than anticipated. Furthermore, excessive charge cycles would be imposed on batteries, reducing their lifetime, efficiency and terminal value, i.e. the value of the battery at the end of life of the EV.

Another important constraint that the algorithm can take into account is the constraints imposed by hardware/location. To be more precise, when determining the fleet's charge schedule, the algorithm can take into account the maximal amount of power that can be delivered by each charge station. Moreover, this bound might be time dependent.

As is indicated by claim 3, the technical specifications of assets used in the battery fleet charging method according to the invention may comprise one or more of:
- cell chemistry of one or more of the batteries;
- capacity of one or more of the batteries;
- capacity loss of one or more of the batteries;
- lifetime of one or more of the batteries;
- information indicative for the battery management system of one or more of the batteries;
- type of charger of one or more of the batteries;
- amount of charge cycles of one or more of the batteries;
- load curve of one or more of the batteries; and
- local current, voltage and/or power limits of the power grid.

The cell chemistry will be indicative for the maximum number of charge cycles, at cell level, and given a certain depth-of-discharge (DoD), and the charge speed or more generally the load curve. The capacity of the battery obviously informs the algorithm according to the invention on the theoretical maximum energy that the battery can carry. The capacity loss may be monitored over time, e.g. by monitoring the full absorbed energy of the battery during successive charge cycles. Just like the capacity loss, the lifetime that may initially be extracted from the technical specifications or battery cell chemistry, may be adapted dynamically over time by monitoring e.g. the State-of-Charge (SoC) when maximally charged and the accompanying charging curve of the battery during successive charge cycles. The battery management system or BMS concerns the electronics that surround the battery in order to monitor its state (especially at the cell and pack level), protect the battery (at cell and pack level), report data, etc. The asset parameters which serve as inputs/constraints for the algorithm can in some cases (depending on the type of EV/battery), be read off directly from the BMS or through internal measurement connected to the CANBUS. If not available, the appropriate device can be placed on the battery directly to measure the necessary asset parameters and communicate them directly, e.g. to the server running the algorithm. Also, the approximate load curve of the battery can be read off directly from the charge station, if an energy measuring and timer device are part of it. The amount of charge cycles is a measure for the lifetime of the battery and the capacity loss. Every battery cell has a typical maximum number of charge cycles under specified DoD. Furthermore, the charge/discharge pattern, the charge/discharge voltage/current/power level and other elements contribute to the deterioration of the battery (meaning reduced capacity amongst others). Given that any system that uses the batteries for flexible load and/or storage deteriorates the battery, any such system should consider the amount of charge cycles and the resulting battery deterioration as a key parameter, especially given the significant cost of EV batteries in the current and medium-term future. As one example of why this is important from an economic perspective, the secondary life value of the battery is a primary driver of value for EVs (for lease companies, individual users,...). Any system which uses the batteries for flexible load/storage and deteriorates the battery faster or more significantly such that the second-life value will be reduced without compensating the user for this, will be unusable in the market of electric mobility. It is therefore an important consideration in the method according to the current invention when determining which batteries to charge. The initial load curve, mainly dependent on the cell chemistry, BMS and charger hardware, may be tuned dynamically over time in view of the battery usage and feedback received from the appropriate measuring device on the battery (BMS or other). As will be appreciated by the skilled person, various combinations of the above listed asset parameters may be used in order to realize variants of the method according to the current invention each optimizing in the one way or the other the charge cycles and usage of individual batteries.

As is further specified by claim 4, the user constraints may comprise a desired state of charge at an expected unplug time of one or more of said batteries.

Indeed, the driver of a PHEV shall specify desired load states of the battery at planned travel times. Such desired state of charge (SoC) at a particular future point in time shall preferably be treated as a user override in the method according to the current invention.

According to another optional aspect defined by claim 5, the method for charging a fleet of batteries according to the current invention may comprise:
- regularly receiving state of charge information of the batteries; and
- dynamically optimizing the battery charge schedules for individual batteries in the fleet in consideration of the state of charge information.

Thus, in addition to the asset specifications, the battery charge schedules preferably also take into account real-time state of charge (SoC) information, collected for instance from the CANBUS of the vehicle or from an SoC measurement device mounted directly on the battery and enabled to communicate the current SoC when necessary. The SoC information will be useful in avoiding unnecessary charge cycles and determining the actual load capacity of the battery. In addition the SoC information can be used to dynamically adapt asset parameters such as the load curve of the battery.

According to yet another optional aspect defined by claim 6, the method for charging a fleet of batteries according to the current invention may comprise:
- collecting historical data on energy balancing demands and generating descriptive statistics thereon, to thereby capture energy process momentums over time; and
- determining the fleet charge schedule for the fleet in consideration of the statistical information.

Such statistics will enable the method according to the invention to account for expected patterns in energy demand and energy production of the energy portfolio manager, for instance hourly, daily, weekly and/or seasonal patterns. Using these descriptive statistics, appropriate stochastic processes are used to model the balancing processes, with stochastic parameters chosen to fit the observed data in a self-adaptive way.

According to a further optional aspect defined by claim 7, the method for charging a fleet of batteries according to the current invention may comprise:
- stochastically modeling user behavior for at least part of the fleet of batteries, based on collected descriptive statistics of user behavior; and
- dynamically optimizing the battery charge schedules for individual batteries in the fleet in consideration of the stochastic modeled user behavior.

The method to fit the parameters describing the various stochastic/statistical processes allows these to adapt over time to changes in behavior. The collected descriptive statistics of user behavior may for instance comprise the number of driving sessions per day, the expected SoC at arrival for each session, etc., with corresponding uncertainties. This way, the battery charge schedules produced according to the current invention will account for expected patterns in the charge behavior of the users, for instance hourly, daily, weekly or seasonal drive patterns of the PHEV drivers and will take those patterns into account when determining the optimal decision.

As is further specified by claim 8, the stochastic modeled user behavior may comprise one or more of:
- expected plug-in time of one or more of the batteries;
- expected unplug time of one or more of the batteries;
- expected state of charge at plug-in time of one or more of the batteries;
- probability of a user constraint override;
- expected state of health at plug-in time of one or more of the batteries;
- expected charge duration of one or more of the batteries; and
- expected location at plug-in time of one or more of the batteries.

Indeed, typical user-behavior parameters that may be modeled stochastically (and analyzed with e.g. a pattern recognition method) are plug and unplug times, charge locations and durations, and the state of health (SoH) and state of charge (SoC) at plug and unplug times. The information that enables modeling these parameters stochastically may be collected regularly for instance from the CANBUS of the vehicle, or from an SoC and/or SoH measurement device mounted directly on the battery and enabled to communicate the current SoC and/or SoH when necessary, or from the real-time power absorbed/emitted by the battery.

In the absence of direct measuring devices, the SoC and/or SoH of the battery at plug-in time will be inferred from the observed charge curve when an energy metering device, timer and communication device are chosen to be present in the charge station. Namely, the innovation will use statistical methods (like e.g. Bayesian learning) to infer the SoC and/or SoH given the power curve observed after the vehicle plugs in, so as to make the prediction of the SoC and/or SoH at plug-in time more accurate as more data is observed. This technique will also enable to keep track of the charge curve that one can expect for each battery as the statistical method applied will translate the empirically observed data back to fitted model parameters, hence the model used is fully self-adaptive.

According to yet another optional aspect defined by claim 9, the method for charging a fleet of batteries according to the current invention may comprise:
- receiving price information for energy (capacity) in the power grid; and
- dynamically adapting the fleet charge schedule and the battery charge schedules in consideration of the price information.

This way, the decision for charging/discharging the fleet or individual batteries will be optimized as well with respect to maximal profit achievable in the market. When an energy portfolio manager for instance requests to shed a quantity of energy at a particular time, it could be optimal to respond to the request, or it could be more optimal to refuse the request, considering expected opportunities at a later time. To automate these decisions, stochastic calculus and probability theory may be implemented to model the various energy processes.

In addition, the algorithm might take into account electricity supply constraints. More concretely, in one implementation, the algorithm will use the expected amount of renewable energy, based on forecasts, that will be available in the future to determine the optimal charging schedules. One possible application thereof is that the proposed method can be used to charge PHEVs with the energy that is produced by a given (renewable) resource like e.g. a wind farm.

According to a further optional aspect of the invented battery fleet charging method, defined by claim 10, the fleet charge schedule is determined using an approximate dynamic program, which can be implemented as e.g.:
- a Monte Carlo simulation; and/or
- a decision tree algorithm.

Indeed, to model the optimal charge pattern of the fleet as a whole, these techniques may be used a.o. The modeling based on these techniques will be explained in detail below when describing preferred embodiments of the invention.

The boundary conditions, which both determine the value of each battery at the end of a single charge session and implement the user constraints and overrides, have an impact on the fleet's charge schedule. Therefore, the algorithm uses carefully chosen boundary conditions which may include valuation techniques related to Kelly betting. In addition, the algorithm monitors the sensitivity of the resulting decision with respect to those conditions.

As is defined by claim 11, the fleet of batteries in the charging method according to the current invention, may comprise:
- batteries of electric vehicles; and/or
- batteries of hybrid electric vehicles; and/or
- second life and/or new stationary batteries.

Although the focus of the current invention lies on PHEVs that are for instance parked on corporate parking lots and stationary aggregated second-life battery packs, the invention obviously is not limited thereto. The method according to the invention may for instance be used in controlling the charging/discharging of batteries in stationary household equipment that are aggregated in a fleet or virtual energy reservoir. For batteries in PHEVs, the current invention primarily focuses on grid-to-vehicle (G2V) power exchange because OEMs today do not allow reverse power exchange, i.e. vehicles discharging their batteries in the electricity grid in order to compensate for underproduction in a energy portfolio. Once vehicle-to-grid (V2G) power exchange is made possible for EVs, the present invention will be applicable thereto without any additional changes. For stationary, second-life battery packs, the method according to the current invention may deliver battery-to-grid and grid-to-battery schedules.

In addition to a battery fleet charging method as defined by claim 1, the current invention concerns a corresponding carrier as defined by claim 12, holding a software program comprising instructions to perform the method.

The carrier may be a stand-alone or networked server, volatile or non-volatile memory in a computer, a controller, a memory card, CD-ROM, DVD or other disk, etc. The computer program also may be used in a cloud computing environment. The computer program shall contain instructions enabling a node or processor in between the power grid and the charge stations or plugs to smartly charge the fleet of batteries in line with the principles of the current invention.

### Brief Description of the Drawings

Fig. 1 illustrates an electrical energy transmission network wherein an embodiment of the battery fleet charging method according to the present invention is implemented;

Fig. 2 is a graph illustrating fluctuations of energy demand over time for an energy portfolio manager in the network of Fig. 1; and

Fig. 3 illustrates an embodiment of the battery fleet charging method according to the present invention, implemented in the network of Fig. 1.

Fig. 4 illustrates a stationary battery application of the battery fleet charging method according to the present invention;

Fig. 5 illustrates a variant stationary battery application of the battery fleet charging method according to the present invention;

Fig. 6 illustrates an implementation of the communication in an embodiment of the present invention;

Fig. 7 illustrates an implementation of the ICT infrastructure in an embodiment of the present invention;

Fig. 8 illustrates the tracking of the SoH of a battery in an embodiment of the battery fleet charging method according to the present invention; and

Fig. 9 illustrates a micro-grid application of the battery fleet charging method according to the present invention.

### Detailed Description of Embodiment(s)

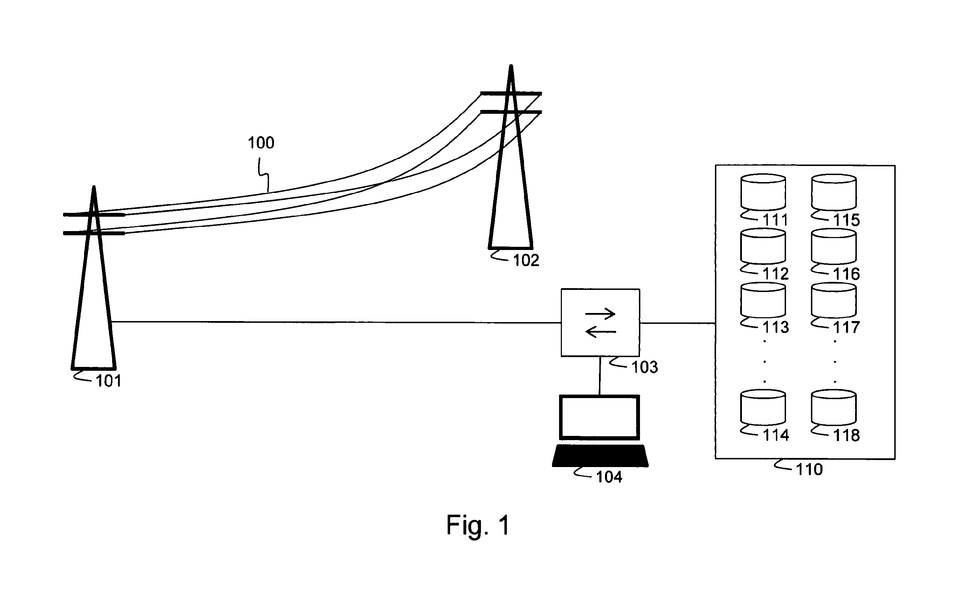

Fig. 1 shows a high voltage (typically 380-26 kV) electricity transmission grid 100 that is operated by a transmission systems operator or TSO like for instance the federal transmission system operator Elia in Belgium. The TSO has a responsibility to maintain the grid's frequency and voltage in balance.

A distribution grid operator or DSO develops and maintains lower-voltage electricity distribution networks, e.g. 15 kV networks and lower. The combined TSO's transmission grid and DSO's distribution grids is referred to by power grid within the context of this patent application.

Among installations connected to the power grid, a distinction can be drawn between power generating facilities and power consuming facilities. Most power consuming facilities are connected to the lower-voltage distribution networks, whereas large power generating facilities inject their electric energy into the grid at higher voltages (e.g. 70 kV or higher) and are therefore connected to the transmission grid. Each facility connected to the power grid however is governed by a connection contract. Access to the power grid is governed by an access contract.

The access contract governs access to the system for all energy injection points and energy extraction points of an access holder, in particular the right of the access holder to inject energy into or draw energy of the power grid. The access contract also stipulates the energy portfolio manager that is responsible for each access point. This energy portfolio manager typically owns an energy generation and consumption portfolio and is responsible for maintaining balance in its portfolio. The energy portfolio manager can be a producer, large customer or trader of electrical energy, like for instance Accord Energy, Delta Energy, Deutsche Bank, EDF Trading, Electrabel, EON, Lampiris, etc. on the Belgian energy market. The present invention shall enable these energy portfolio managers to respect their portfolio balancing commitments and avoid penalization by the TSO or DSOs where they are connected to.

Fig. 1 further shows a battery reservoir 110. The battery reservoir 110 contains a fleet of a few thousand diverse batteries, a number of which are shown in Fig. 1: 111, 112, 113, 114, 115, 116, 117, 118. The batteries are located in plug-in electric vehicles (PEVs) or plug-in hybrid electric vehicles (PHEVs) located for instance at corporate parking lots, or they may be second-life PEV/PHEV batteries located in a stationary reservoir. In the embodiment illustrated by Fig. 1, first life batteries in vehicles are supposed to be used for grid-to-vehicle (G2V) power exchange only, even though the innovation would work for vehicle-to-grid (V2G) power exchange with vehicles also, whereas stationary aggregated battery packs in the reservoir 110 may be used for battery-to-grid as well as grid-to-battery power exchange. The virtual reservoir 110 of thousands of batteries will be charged / discharged via access point 103 under control of an intelligent charge control algorithm running on computer 104. The charge control algorithm shall optimize the charging / discharging patterns of the batteries such that an energy portfolio manager's day ahead and intra-day balancing needs are maximally addressed, driver constraints are obeyed, and asset deterioration is accounted for.

The battery fleet charge control algorithm running on computer 104 to generate a charging schedule for the fleet of batteries 110 is implemented in a standard programming language, e.g. Java. The software implementation of the algorithm yields adequate memory and speed performance. More specifically, the total memory footprint of running the software for 250 batteries is less than 2 GB. In addition to the memory footprint constraint, the processing time is such that calculation of the charge schedules for 250 batteries will be completed in less than 15 seconds with a CPU like for instance Intel's Core 2 Duo CPU T8300 with 2.4 GHz processor clock, hereby excluding the initialization process.

The battery fleet charge control algorithm running on computer 104 receives as one of its inputs the technical specifications of the batteries 111 ... 118, e.g. the cell chemistry and capacity of the individual batteries, the theoretical lifetime, the load curve, etc. The battery fleet charge control algorithm is further informed on the technical specifications of the battery chargers, e.g. the in-vehicle charger for a first life battery in the fleet 110. The battery management system further informs the fleet charge control algorithm regularly on the state of charge (SoC) and state of health (SoH) of the individual batteries. In addition, specific user constraints like the availability of the vehicle with fully charged battery at a particular future point in time, serve as external inputs for the algorithm.

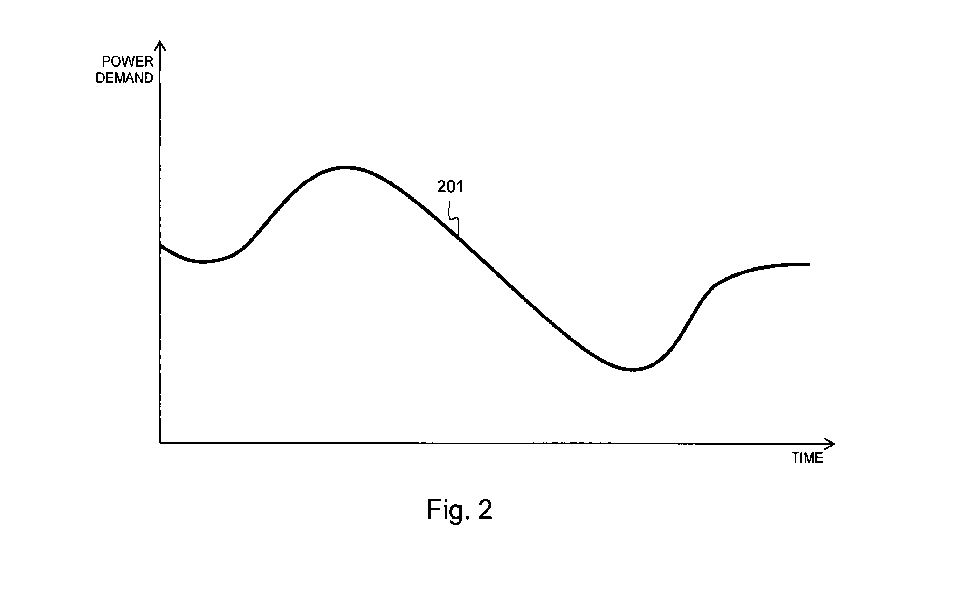

The battery fleet charge control algorithm running on computer 104 dynamically maintains a number of parameters. The battery deterioration is maintained as a function of the charge pattern and charge cycles added through usage of the battery in the energy market. Further, the user behaviour is stochastically modelled as a function of the monitored charge behaviour in the past. The driver's behaviour in other words is modelled as a stochastic process in order to determine expected plug-in times and locations (i.e. when and where will the vehicle be parked), expected unplug times (i.e. when will the vehicle leave the parking lot), expected state of charge or SoC at arrival for a charge session (i.e. battery load when parking and when leaving the parking lot), expected state of health (i.e. expected capacity loss and load curve when parking). Further, the energy portfolio manager's demands for balancing its portfolio are modelled by a Poison process. This is illustrated by Fig. 2 which shows the energy demand 201 of a particular energy portfolio manager over time. Collecting historical data on the energy portfolio balancing needs enables the algorithm running on computer 104 to generate descriptive statistics capturing the energy process momentums.

The battery fleet charge control algorithm at each period in time generates the power level (including zero) at individual battery level used to charge or discharge during a given period of time. As a consequence, the total amount of energy to be exchanged is determined and communicated to the energy portfolio manager. To be able to compute the optimal decision, the algorithm uses the distribution of future energy requests which is modelled statistically. The requests are then sampled from this distribution at different time intervals (which might be regular, e.g. every 15 minutes if this is the pace at which the energy portfolio manager has to maintain balance to avoid penalization). The samples may be the result of clustering and averaging such that the multinomial distribution of samples that are used in the model to represent the expected energy demand of the energy portfolio manager during a given time interval is close to the original distribution (e.g. in the sense of Jensen-Shannon).

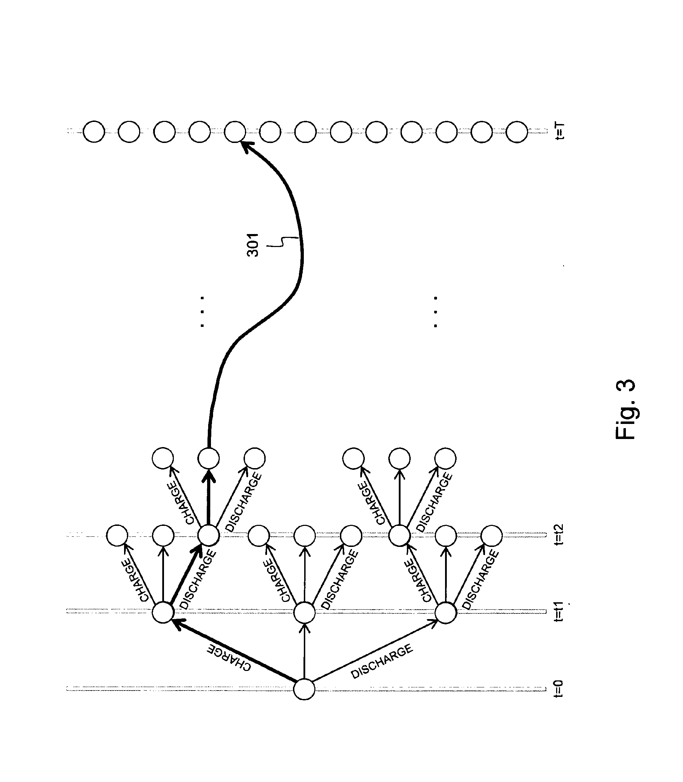

Starting from this energy demand samples, Fig. 3 illustrates the decision tree algorithm that is applied to determine for each period of time, t=0, t=t1, t=t2, ..., t=T if the battery fleet will be charged, will not be charged, or will be discharged. Starting from the energy portfolio manager's demands optimizing his portfolio balance at time T (e.g. the end of the day), a backwards induction mechanism enables to decide at each point in time to charge, discharge or do nothing. This backwards induction algorithm shall establish a path 301 through the decision tree by maximizing the profit generated by e.g. addressing the energy portfolio manager's needs every 15 minutes and by minimizing the costs resulting from e.g. wear of the batteries. An energy portfolio manager's request to shed a quantity of energy may for instance be refused at a particular point in time because it is more optimal to respond to the request at a later time considering expected opportunities in the energy market at a later time. In addition, the above mentioned decision tree is constructed in such a way that all user constraints are satisfied automatically.

Once the path 301 or charge/discharge schedule is established at fleet level, the algorithm shall take charge/discharge/do nothing decisions at individual battery level. Here, the algorithm considers technical specifications of the batteries, i.e. the state of charge and charge pattern, the cost of deterioration of a battery by charging/discharging given its state of health, and the expected driver's behaviour based on descriptive statistics computed from recorded behaviour in order to decide which batteries to charge/discharge at each point in time to realize the decision taken at fleet level.

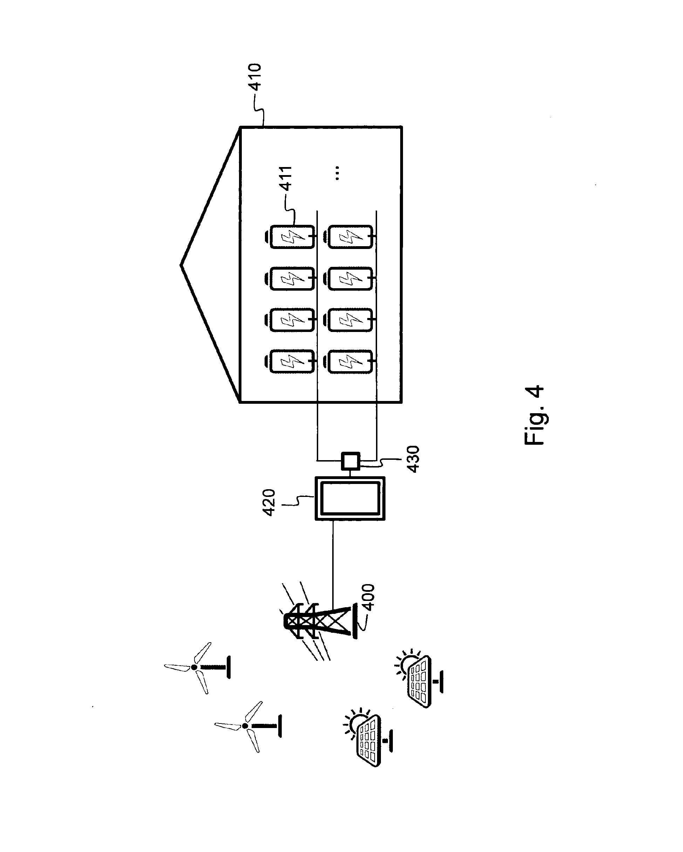

Fig. 4 illustrates a stationary battery application of the present invention. As mentioned above, the invention reduces to a smart battery pack management system in this application. A set of new and/or second-life battery packs 411 are placed in a thermally managed warehouse 410 in optimal series/parallel configuration. The set of stationary batteries 411 is connected to the grid 400 via an inverter and/or transformer 420. The charging of the set of stationary batteries 411 is controlled by controller 430 steered by smart software taking into account all information about the energy process it is seeking to balance, as well as the SoC and SoH of the batteries 411, so as to provide the most optimal charging schedule.

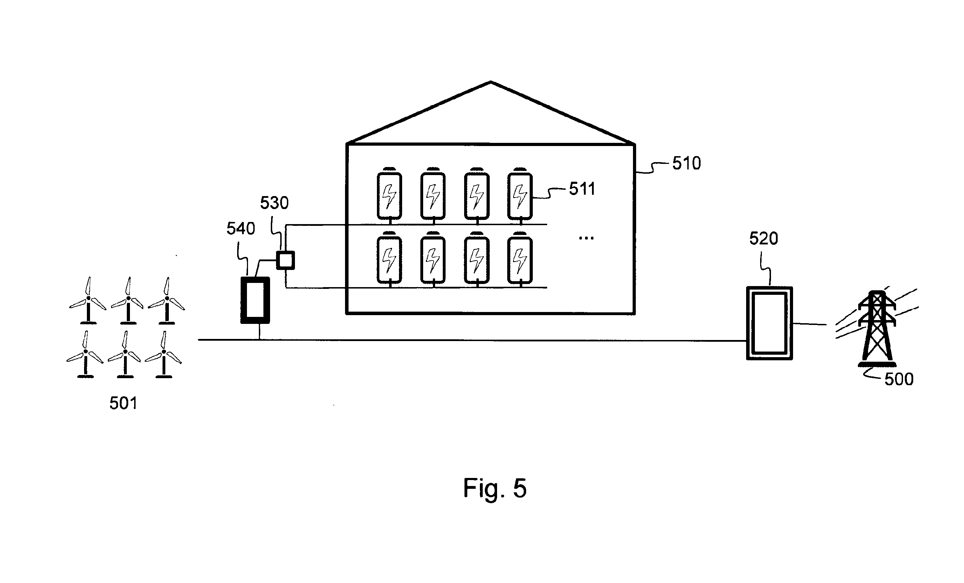

Fig. 5 illustrates a variant stationary battery application of the present invention. Again, the invention reduces to a smart battery pack management system in this application. A set of new and/or second-life battery packs 511 are placed in a thermally managed warehouse 510 in optimal series/parallel configuration. The warehouse 510 is placed next to a renewable energy production facility 501, in this example a wind farm where it is directly connected to via inverter 540. Fig. 5 further shows the coupling of the intermittent energy production facility 501 to the poser grid 500 via transformer 520. The charging of the batteries 511 is steered by smart software located on a programmable logic controller 530 taking into account all information about energy market data and the renewable energy production process it is seeking to balance, in particular forecasts versus observed production and electricity prices, as well as the SoC and SoH of the batteries 511, so as to provide the most optimal charging schedule to optimize usage of the production assets 501. This includes for instance minimizing penalties due to mis-forecasts and energy storage to sell energy at optimal prices.

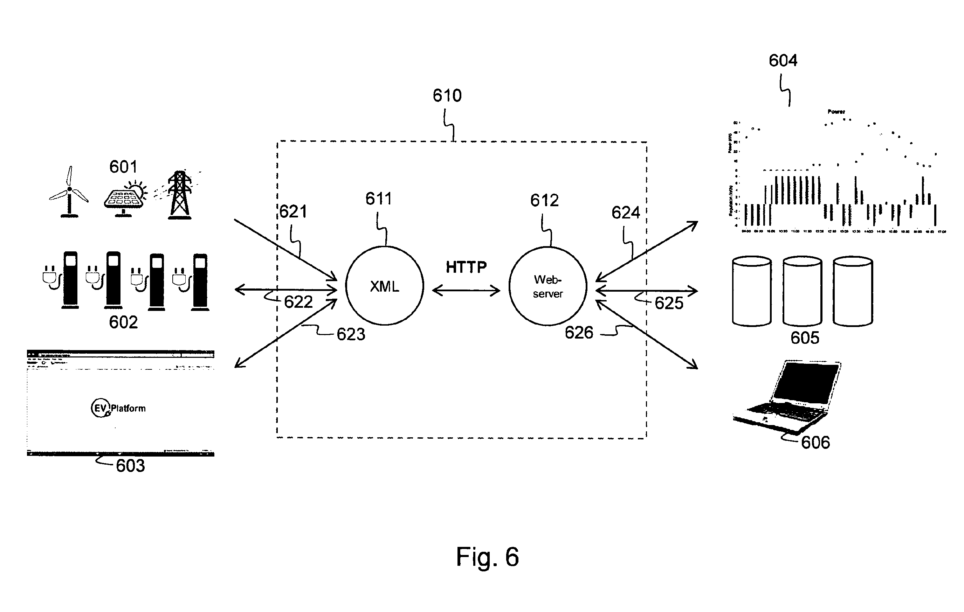

Fig. 6 illustrates an implementation of the communication between the energy portfolio manager 601, charge points 602 for EVs, and users via website 603 on the one hand, and IT infrastructure 610 to respond to driver actions, user overrides and energy requests. The communication may for instance be based on HTTP requests and XML reports 611 that are made accessible through a web server 612.

In the process flow shown in Fig. 6, market data, and real-time imbalances are fed as is indicated by arrow 621. EV fleet data are communicated and charge schedule instructions are sent back as is indicated by arrow 622. User overrides are entered through a dedicated page 603 on the Internet, while on the same page information about the charging for an EV driver may be displayed, e.g. the current SoC, energy consumption, etc. This is indicated by arrow 623. Interaction with a balancing console allows the energy portfolio manager to have transparency on the imbalances and EV load curves 604, while enabling the energy portfolio manager to override the dynamic optimization. This is indicated by arrow 624 in Fig. Interaction with a database 605 where all important information like EVs and drivers, history, market data, etc. is stored, is represented by arrow 625. At last, interaction with a server 606, e.g. cloud computing, on which algorithms are running, e.g. implemented in Java, is represented by arrow 626 in Fig. 6.

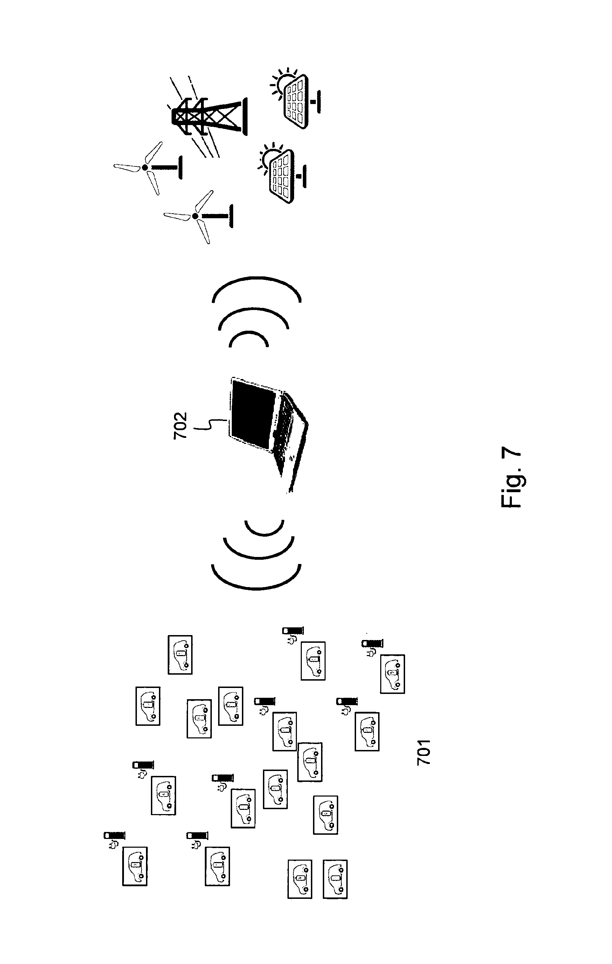

Fig. 7 illustrates an ICT implementation in an embodiment of the present invention with smart charge points 701. The charge points 701 contain, amongst others, energy metering, timers, and a GPRS-enabled controller for remote on/off switching. The charge points 701 communicate charge power curves, plug-in times, unplug times, driver identification and other data directly with a central server/database infrastructure 702. The central server/database infrastructure 702 simultaneously processes energy market data, meteorological data and other relevant market data, e.g. data on the regulatory environment. The central server 702 runs algorithms to produce most optimal charging schedule, and communicates this back to the charge points 701 with instructions to switch them on/off.

A similar ICT implementation may communicate directly with the vehicle through communication (PLC, GPRS,...) and power control devices which are present in the vehicle.

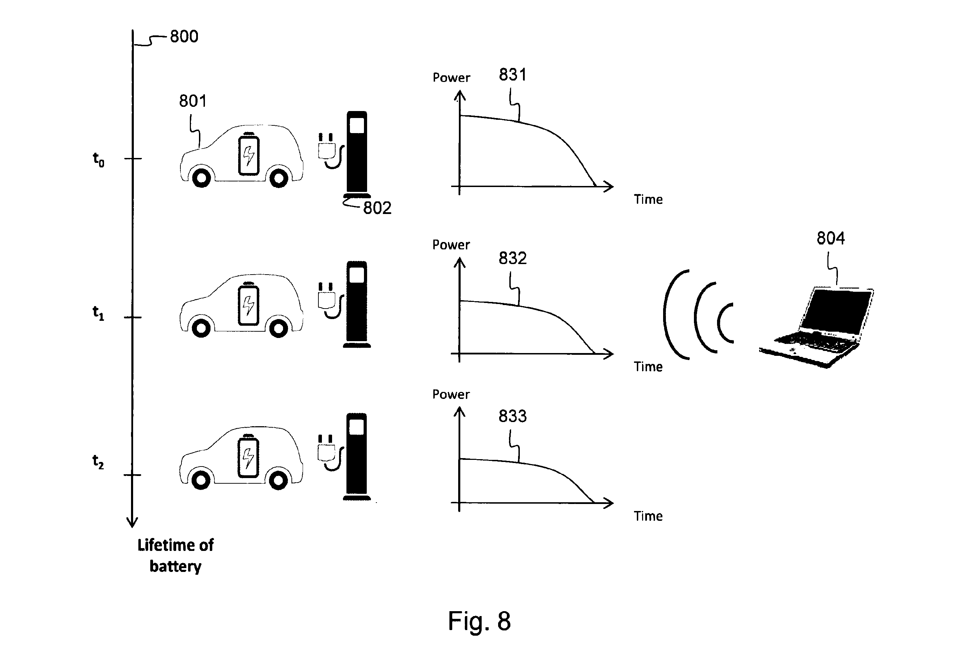

Fig. 8 illustrates the tracking of the SoH of a battery in EV 801 through a self-adaptive system. The observed load curves 831, 832 and 833 at times to, t₁ and t₂ when EV 801 is charged at a charge station 802, are filtered and used by server 804 to estimate model SoH parameters, e.g. the parameters describing the shape of the load curve itself, or the capacity.

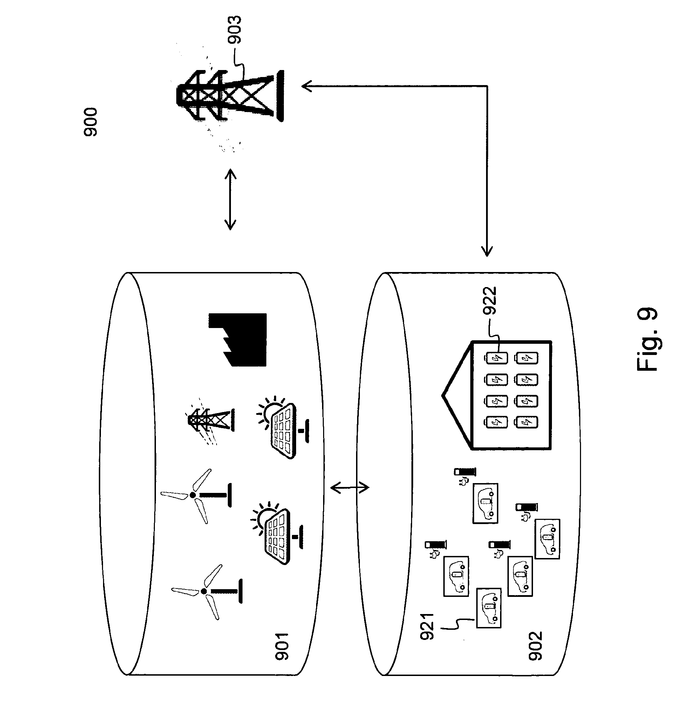

Fig. 9 illustrates a micro-grid application of the present invention. A micro-grid 900 consists of production assets 901, loads 902 and a grid 903, and seeks to optimize the resources within a given local area. Through the current invention, an entire set of EVs 921 and stationary batteries 922 can intelligently exchange energy with the micro-grid 900, so as to offer balancing services. These EVs 921 and stationary batteries 922 may be located within the perimeters of the micro-grid 900, or outside.

In a variant application, the micro-grid is a virtual power plant (VPP), either localized in a certain area or dispersed within a larger grid. The charge scheduling method according to the invention allows the EVs and stationary batteries to interact intelligently with the VPP so as to strategically store and/or balance fluctuating energy production.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A method for charging a fleet of batteries (110) from a power grid (100), **CHARACTERISED IN THAT** said method comprises:
- determining a fleet charge schedule (301) for said fleet (110) thereby optimizing an energy portfolio balance of an energy portfolio manager; and
- dynamically optimizing battery charge schedules for individual batteries (111, 112, 113, 114, 115, 116, 117, 118) in said fleet (110), said battery charge schedules in aggregation realizing said fleet charge schedule (301), and said battery charge schedules being optimized dynamically in consideration of at least technical specifications of assets and user constraints of battery users.

2. A method for charging a fleet of batteries (110) according to claim 1, wherein said technical specifications of assets comprise information indicative for the deterioration of said batteries (111, 112, 113, 114, 115, 116, 117, 118).

3. A method for charging a fleet of batteries (110) according to claim 1 or claim 2,
wherein said technical specifications of assets comprise one or more of:
- cell chemistry of one or more of said batteries (111, 112, 113, 114, 115, 116, 117, 118);
- capacity of one or more of said batteries (111, 112, 113, 114, 115, 116, 117, 118);
- capacity loss of one or more of said batteries (111, 112, 113, 114, 115, 116, 117, 118);
- lifetime of one or more of said batteries (111, 112, 113, 114, 115, 116, 117, 118);
- information indicative for the battery management system of one or more of said batteries (111, 112, 113, 114, 115, 116, 117, 118);
- type of charger of one or more of said batteries (111, 112, 113, 114, 115, 116, 117, 118);
- amount of charge cycles of one or more of said batteries (111, 112, 113, 114, 115, 116, 117, 118);
- load curve of one or more of said batteries (111, 112, 113, 114, 115, 116, 117, 118) and
- local current, voltage and/or power limits of said power grid (100).

4. A method for charging a fleet of batteries (110) according to claim 1, wherein said user constraints comprise a desired state of charge at an expected unplug time of one or more of said batteries (111, 112, 113, 114, 115, 116, 117, 118).

5. A method for charging a fleet of batteries (110) according to any one of claims 1 to 4, said method further comprising:
- regularly receiving state of charge information of said batteries (111, 112, 113, 114, 115, 116, 117, 118); and
- dynamically optimizing said battery charge schedules for individual batteries (111, 112, 113, 114, 115, 116, 117, 118) in said fleet (110) in consideration of said state of charge information.

6. A method for charging a fleet of batteries (110) according to any one of claims 1 to 5, said method further comprising:
- collecting historical data on energy balancing demands and generating statistic information thereon, to thereby capture energy process momentums over time; and
- determining said fleet charge schedule (301) for said fleet (110) in consideration of said statistic information.

7. A method for charging a fleet of batteries (110) according to any one of claims 1 to 6, said method further comprising:
- stochastically modeling user behavior for at least part of said fleet of batteries based on collected descriptive statistics of user behavior; and
- dynamically optimizing said battery charge schedules for individual batteries (111, 112, 113, 114, 115, 116, 117, 118) in said fleet (110) in consideration of said stochastic modeled user behavior.

8. A method for charging a fleet of batteries (110) according to claim 7,
wherein said stochastic modeled user behavior comprises one or more of:
- expected plug-in time of one or more of said batteries (111, 112, 113, 114, 115, 116, 117, 118);
- expected unplug time of one or more of said batteries (111, 112, 113, 114, 115, 116, 117, 118);
- expected state of charge at plug-in time of one or more of said batteries (111, 112, 113, 114, 115, 116, 117, 118);
- probability of a user constraint override;- expected state of health at plug-in time of one or more of said batteries (111, 112, 113, 114, 115, 116, 117, 118);
- expected charge duration of one or more of said batteries (111, 112, 113, 114, 115, 116, 117, 118); and
- expected location at plug-in time of one or more of said batteries (111, 112, 113, 114, 115, 116, 117, 118).

9. A method for charging a fleet of batteries according to any one of claims 1 to 8, said method further comprising:
- receiving price information for energy in said power grid; and
- dynamically adapting said fleet charge schedule and said battery charge schedules in consideration of said price information.

10. A method for charging a fleet of batteries according to any one of claims 1 to 9, wherein said fleet charge schedule is determined using an approximate dynamic program.

11. A method for charging a fleet of batteries according to any one of claims 1 to 10, said fleet of batteries comprising:
- batteries of electric vehicles; and/or
- batteries of hybrid electric vehicles; and/or
- second life and/or new stationary batteries.

12. Carrier with software program comprising instructions to perform the method of any one of claims 1 to 11.
